# EUROPEAN PATENT APPLICATION

(11) **EP 4 841 223 A1**
(43) Date of publication of application: **18.11.2026**
(21) Application number: 26178496.1
(22) Date of filing: 13.05.2026
(51) Int. Cl.: G01J 3/10, G01J 3/28, G01J 3/45, G02B 13/14, G02B 21/36, G02B 27/58

(54) **HIGH-SPATIAL-RESOLUTION SPECTROSCOPIC IMAGING APPARATUS**

(30) Priority: 14.05.2025 JP 2025081464
(71) Applicant: JASCO Corporation, Hachioji-shi Tokyo 192-8537 (JP); Keio University, Tokyo, 108-8345 (JP)
(72) Inventor: Koshoubu, Jun, Tokyo, 192-8537 (JP); Shimamura, Takashi, Tokyo, 192-8537 (JP); Masago, Hisashi, Tokyo, 192-8537 (JP); Maki, Hideyuki, Kanagawa, 223-8522 (JP)
(74) Representative: Lippert Stachow Patentanwälte Rechtsanwälte

(57) **Abstract**

A spectroscopic imaging apparatus includes: an array light source (10) composed of multiple light-emitting elements (12); a microscopic measurement portion (20) that projects multiple spots, which are images of the light-emitting elements (12), on a sample; a spectroscopic means (30) that spectroscopically processes light from the multiple spots collectively; and a single-element detector (40) that detects spectroscopically processed light, and the spectroscopic imaging apparatus acquires a spectroscopic image of the sample based on a detection signal of the single-element detector (40). The light-emitting element (12) has a light-emitting surface having a size of 0.1 µm or greater and 30 µm or less. The spectroscopic imaging apparatus further includes a light source control means (50) that modulates light intensity of the multiple light-emitting elements (12) in cyclicities different from each other, and a signal separation means (60) that separates the detection signal into signal components of each cyclicity of the light-emitting elements (12), and acquired the spectroscopic image based on the separated signal component.

## Description

### Related Application

This application claims the priority of Japanese Patent Application No. 2025-081464 filed on May 14, 2025, the disclosure of which is incorporated herein by reference in its entirety.

### Technical Field

The present invention relates to a spectroscopic imaging apparatus, and particularly to technological improvement in spatial resolution thereof.

### Background Art

Infrared microscopes, for example, are known as apparatus for acquiring spectroscopic data of a minute measurement portion on a sample. An infrared microscope uses an objective mirror on the irradiating side to form a spot of irradiation light (irradiation region) on a measurement portion, and uses an objective mirror on the collecting side to collect transmitted light (or reflected light). A detector is provided such that a detection region on the sample matches with the above-described spot, and detects light from the detection region to acquire spectroscopic data of the measurement portion of the sample.

The user can see a visible-light image of a region of interest (relatively wide measurement range) on the sample by using an observation function of the infrared microscope at the start of analysis. Moreover, there is an infrared microscope that has a function of displaying a spectroscopic image of the measurement range by partitioning the measurement range into numerous measurement portions, and acquiring spectroscopic data of these measurement portions (i.e., spectroscopic imaging function). The user may compare both of the visible-light image and the spectroscopic image, and determine the measurement portion to be analyzed in detail, so that the spectroscopic imaging function is highly important in infrared microscopes.

For example, the infrared microscope described in Patent Literature 1 has a spectroscopic imaging function using a linear array detector. The linear array detector is composed of multiple light-receiving elements aligned in one line, and is provided such that multiple detection regions align in one line within a spot on a sample. This infrared microscope is configured to align the line of the detection region with the first line of the measurement portion to acquire the first line of spectroscopic data, align the line of the detection region with the adjacent second line of the measurement portion to acquire the second line of spectroscopic data, and repeat this action to acquire spectroscopic data of all measurement portions within the measurement range.

### Citation List

Patent Literature 1: Japanese Patent No. 5507249 B
Patent Literature 2: International Patent Publication No. WO2019/176705 A

### Summary of Invention

### Technical Problem

However, spatial resolution of the spectroscopic image acquired by a conventional linear array detector is not as high as spatial resolution of the visible-light microscopic image. Difference in spatial resolution between the two images above is large, and it may be difficult to compare the visible-light microscopic image and the spectroscopic image. For this reason, a spectroscopic imaging apparatus that enables measurement with high spatial resolution is demanded by users.

### Solution to Problem

The inventors focused on an array light source composed of light-emitting elements formed of nanocarbon materials (Patent Literature 2). The size of the light-emitting surface of one light-emitting element is minute, which is micrometer order or smaller, and numerous light-emitting elements can be disposed two-dimensionally on one chip. By using this array light source, images of numerous minute light-emitting elements (multiple spots) can be projected on the sample, and the light-emitting element and the spot can be associated in a one-to-one relationship. Accordingly, transmitted light (or reflected light) from these spots can be detected collectively with a single-element detector, and measurement can be performed with high spatial resolution. In addition, signal components of multiple measurement portions on the sample can be acquired without using conventional linear array detectors.

Here, the detection signal from the single-element detector must be separated into signal components corresponding to each spot position on the sample. However, by lighting multiple light-emitting elements of the array light source in cyclicities different from each other, a multiplex-modulated detection signal can be acquired from the single-element detector, and by executing processing of separating the multiplex-modulated detection signal into signals of each cyclicity of the light-emitting elements, the signal components corresponding to each spot position on the sample can be acquired collectively.

That is, in order to achieve the above-described object, a spectroscopic imaging apparatus of the present invention comprises: an array light source (10) composed of multiple light-emitting elements (12); a microscopic measurement portion (20) that projects multiple spots, which are images of the light-emitting elements (12), on a sample; a spectroscopic means (30) that spectroscopically processes light from positions of the multiple spots collectively; and a single-element detector (40) that detects light from the spectroscopic means (30), and is a spectroscopic imaging apparatus configured to acquire a spectroscopic image of the sample based on a detection signal of the single-element detector (40), the spectroscopic imaging apparatus characterized in that:
the light-emitting element (12) has a light-emitting surface having a size of 0.1 µm or greater and 30 µm or less, wherein the size of the light-emitting surface is expressed as a diameter in the case of a circular shape, a length of one side in the case of a square, or a length of the longitudinal side in the case of a rectangle, and a light source control means (50) that modulates light intensity of the multiple light-emitting elements (12) in cyclicities different from each other is comprised; and
a signal separation means (60) that separates the detection signal into signal components of each cyclicity of the light-emitting elements (12) is comprised to acquire the spectroscopic image based on the separated signal component.

Here, the "microscopic measurement portion" (20) comprises at least one measurement optical system selected from transmission measurement, reflection measurement, and total-reflection measurement. Moreover, the "spectroscopic means" (30) is a spectrometer such as a diffraction grating or a prism in a dispersive spectrophotometer, or an interferometer in a Fourier transform spectrophotometer suitable for measurement in mid-infrared and near-infrared regions.

Moreover, "cyclicity being different" indicates that, for example, when light intensity of the light-emitting element (12) is modulated cyclically, its frequency differs in each light-emitting element. Or, it indicates that the frequency of light-intensity modulation of the light-emitting element (12) is the same, but phase of light-intensity modulation is different from each other. Moreover, by lighting multiple light-emitting elements in a two-dimensional light-emission pattern using a row component of a Hadamard matrix, and sequentially changing the rows of the Hadamard matrix, the two-dimensional light-emission pattern is changed. Accordingly, multiple light-emitting elements can be modulated in cyclicities different from each other.

In the above-described spectroscopic imaging apparatus, the light source control means (50) preferably modulates light intensity of the multiple light-emitting elements (12) with different frequencies (f1, f2, f3, ...). Or, the light source control means (250) preferably modulates light intensity of the multiple light-emitting elements (12) with the same frequency but different phases (θ1, 02, θ3, ...).

Moreover, the signal separation means (60) preferably uses a signal that synchronizes with the cyclicity of each light-emitting element (12) to synchronously detect signal components of the cyclicities of respective light-emitting elements (12) from the detection signal.

Moreover, the signal separation means (160) preferably samples the detection signal at a timing depending on the frequencies (f1, f2, f3, ...) of the light-emitting elements (12), transforms the sampled signal into a digital signal, performs fast Fourier transform (FFT) processing, and acquires signal components of the frequencies (f1, f2, f3, ...) of each light-emitting element (12).

Moreover, the light source control means (350) preferably
executes two light-emission patterns of: a pattern of lighting the light-emitting element corresponding to "1" and turning off the light-emitting element corresponding to "-1"; and a pattern of turning off the light-emitting element corresponding to "1" and lighting the light-emitting element corresponding to "-1", for each row of a Hadamard matrix of order N, which is the same as the total number N of the multiple light-emitting elements (12), and
modulates light intensity of the multiple light-emitting elements (12) by using the first row to the Nth row of the Hadamard matrix as one cycle, and
the signal separation means (360) preferably acquires the difference between the detection signals of the two light-emission patterns for each row of the Hadamard matrix, executes transformation based on the Hadamard matrix, and acquires signal components of each light-emitting element (12).

The above-described spectroscopic imaging apparatus preferably comprises a moving means (14, 15, 18, 24) that changes a relative positional relationship between the sample and the multiple spots projected on the sample.

### Advantageous Effects of Invention

According to the configuration of the spectroscopic imaging apparatus of the present invention, the array light source in which numerous light-emitting elements 12 of micrometer order or smaller are disposed on one chip is used, so that multiple minute spots can be projected on the sample. Moreover, the light source control means lights each light-emitting element in cyclicities that are different from each other, so that the multiplex-modulated detection signal is output from the single-element detector, and this detection signal is separated into signal components of each cyclicity by the signal separation means, so that signal components corresponding to each spot position on the sample can be acquired. Therefore, light from multiple spots can be detected collectively by the single-element detector, and measurement with high spatial resolution can be performed. Moreover, without using conventional linear array detectors, signal components of multiple spots on the sample corresponding to the light-emitting elements in a one-to-one relationship can be acquired collectively, and the spectroscopic imaging apparatus of high spatial resolution can be provided.

### Brief Description of Drawings

Figure 1 is a diagram showing an entire configuration of a spectroscopic imaging apparatus according to a first embodiment of the present invention.
Figure 2 is an explanatory diagram of a continuous scan mode in the above-described spectroscopic imaging apparatus.
Figure 3 is an explanatory diagram of FFT processing in the above-described spectroscopic imaging apparatus.
Figure 4 is a diagram showing an entire configuration of a spectroscopic imaging apparatus according to a second embodiment of the present invention.
Figure 5 is an explanatory diagram of a step scan mode in the above-described spectroscopic imaging apparatus.
Figure 6 is an explanatory diagram of FFT processing in the above-described spectroscopic imaging apparatus.
Figure 7 is a diagram showing an entire configuration of a spectroscopic imaging apparatus according to a third embodiment of the present invention.
Figure 8 is a diagram showing an entire configuration of a spectroscopic imaging apparatus according to a fourth embodiment of the present invention.
Figure 9 is a diagram showing an entire configuration of a spectroscopic imaging apparatus according to a fifth embodiment of the present invention.
Figure 10 is a diagram showing variations of configuration of a microscopic measurement portion of a spectroscopic imaging apparatus.

### Description of Embodiments

In the following, preferred embodiments of the present invention are described with reference to the drawings. All of the spectroscopic imaging apparatus of each embodiment detect transmitted light from multiple measurement portions on a sample to acquire a spectroscopic image of the sample based on a detection signal thereof.

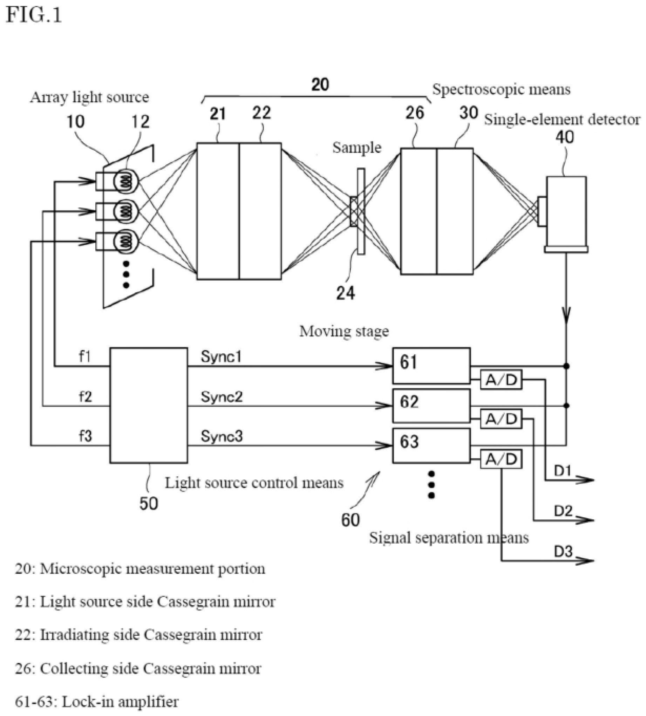

As shown in Figure 1, the spectroscopic imaging apparatus according to the first embodiment of the present invention comprises an array light source 10 composed of multiple minute light-emitting elements 12 disposed in a two-dimensional manner, a light source side Cassegrain mirror 21 that collimates light from the multiple light-emitting elements 12, an irradiating side Cassegrain mirror 22 that irradiates an irradiation region on a sample with the collimated light, a moving stage 24 for placing the sample, a collecting side Cassegrain mirror 26 that collects transmitted light from a detection region on the sample, a spectroscopic means 30 for spectroscopically processing the collected light, and a single-element detector 40 that detects the spectroscopically-processed light collectively. Optical systems ranging from the light source side Cassegrain mirror 21 to the collecting side Cassegrain mirror 26 are referred to as a microscopic measurement portion 20, herein.

Moreover, the spectroscopic imaging apparatus comprises, as configurations of a control system and a signal-processing system, a light source control means 50 for modulating light intensity of the multiple light-emitting elements 12 of the array light source 10 in cyclicities that are different from each other, and a signal separation means 60 for separating a detection signal from the single-element detector 40 into signal components of each cyclicity of the light-emitting elements 12.

Each configuration is described in detail.

### <Array light source>

Each light-emitting element 12 has a light-emitting surface of approximately 1 µm square which is formed on a surface of the chip and has nanocarbon materials as a light-emitting material, and infrared light of a broad wavenumber region ranging from far-infrared to near-infrared is emitted from the light-emitting surface. The size of the light-emitting surface may be 0.1 µm or greater and 30 µm or smaller, preferably 0.5 µm or greater and 10 µm or smaller, and more preferably 1 µm or greater and 5 µm or smaller. Moreover, the size of the light-emitting surface may be the measurement wavelength or smaller of the spectroscopic imaging apparatus. The size of the light-emitting surface, for example, is the diameter when it is a circular shape, a length of one side when it is a square, and a length of a longitudinal side when it is a rectangle.

In the array light source 10, for example, 100 light-emitting elements 12 are two-dimensionally disposed in 10 rows x 10 columns on one chip. Moreover, regarding the number of the light-emitting elements 12, although it is effective when it is two or greater in principle, it is more effective when it is approximately 4 to 50, and preferably approximately 50 to several ten-thousands for more practical imaging. Since the light-emitting surface of the conventional infrared light source (high-luminance ceramic light source) has a size of several mm square, and one light-emitting element 12 is minute, so that even in the array light source in which light-emitting elements are disposed in 1000 rows x 1000 columns (1 million light-emitting elements), light-emitting area as a whole can be suppressed to a size equivalent to or smaller than the light-emitting area of the conventional infrared light source.

Each light-emitting element 12 can emit pulsed light (or square wave light) that flashes at high speed, and lighting of these numerous light-emitting elements 12 is controlled by the light source control means 50 such that light-emission intensity modulates in cyclicities different from each other. In the present embodiment, the array light source 10 in which intensity of multiple light-emitting elements 12 changes preferably with mutually different frequencies ranging from 50 Hz to 10 MHz, and more preferably from 1 kHz to 100 kHz (e.g., any frequency such as 3 kHz or 30 kHz can be used).

### <Cassegrain mirror>

The Cassegrain mirror is also referred to as a Cassegrain-type reflective microscope, and one comprising at least a main mirror and a sub-mirror is used. Moreover, in the irradiating side Cassegrain mirror that is close to the sample, a Cassegrain mirror for total-reflection measurement capable of disposing an ATR crystal (prism) at its focal position can also be used.

The light source side Cassegrain mirror 21 is provided at a position closer to the light-emitting surfaces of the numerous light-emitting elements 12 of the array light source 10, and effectively collects and collimates infrared light from the numerous light-emitting surfaces. On the other hand, the irradiating side Cassegrain mirror 22 irradiates multiple measurement portions on the sample with parallel light from the light source side Cassegrain mirror 21. That is, images of the multiple light-emitting elements 12 are projected on the sample as multiple spots, so that each of the spot positions corresponds to a minute measurement portion on the sample in a one-to-one relationship with the light-emitting element 12.

In the present embodiment, the Cassegrain mirror having a magnification of approximately 8x to 32x is used. Such that the total magnification of the light source side Cassegrain mirror 21 and the irradiating side Cassegrain mirror 22 becomes 1x, Cassegrain mirrors of the same magnification may be used. However, the total magnification of this pair of Cassegrain mirrors 21, 22 may be selected from a range of 0.5x to 2x, and preferably from a range of 0.8x to 1x. The magnification of each Cassegrain mirror may be selected from a range of 8x to 64x, and preferably from a range of 15x to 32x.

For measuring transmitted light, the irradiating side Cassegrain mirror 22 and the collecting side Cassegrain mirror 26 are disposed to be in a vertically-symmetrical relationship having the sample on the moving stage 24 at the center. While Figure 1 and the figures described later show the optical axis passing through the irradiating side Cassegrain mirror 22 and the collecting side Cassegrain mirror 26 horizontally, the optical axis can be horizontal, vertical, or in any other direction. The collecting side Cassegrain mirror 26 is disposed such that the region including multiple spots on the sample corresponds to a detection region of the single-element detector.

### <Spectroscopic means>

The spectroscopic means 30 of the present embodiment may be a spectrometer such as a diffraction grating or a prism in a dispersive spectrophotometer, or may be a Michelson interferometer in a Fourier transform spectrophotometer suitable for measurement of mid-infrared and near-infrared region. In the case of the dispersive spectrophotometer, light in a wavelength region depending on the rotation angle of the diffraction grating or the prism is detected by the single-element detector 40. Or, in the case of the Fourier transform spectrophotometer, an interference wave generated depending on the optical path difference at the Michelson interferometer is detected by the single-element detector 40. In any case, in the spectroscopic means 30, light from the region (detection region) including multiple spots projected on the sample are spectrally separated collectively depending on respective optical principles.

### <Single-element detector>

The single-element detector 40 is composed of an MCT detector having high-speed responsiveness and high spatial resolution (e.g., wavenumber region: 5000 to 750 cm⁻¹, wavelength region: 2.0 to 13.3 µm). Light separated by the spectroscopic means 30 is collected at a light-receiving surface of the single-element detector 40 to be detected. The detection signal is output to the signal separation means 60 in an analogue signal. Although it is not shown in the drawing, a preamplifier that amplifies the detection signal of the single-element detector 40 of Figure 1 may be provided, such that the detection signal from the preamplifier is subjected to lock-in detection.

As described, the spectroscopic imaging apparatus of the present embodiment uses the array light source 10 to project multiple spots that are in a one-to-one relationship with the minute light-emitting elements 12 on the sample, and uses the single-element detector 40 to detect light collectively from the measurement portion including multiple spots, via the spectroscopic means 30. Therefore, the detection signal output from the single-element detector 40 needs to be separated into signal components deriving from each light-emitting element 12 of the array light source 10. In the following, various aspects regarding lighting control of the array light source 10 and the method for separating the detection signal are described in detail.

### <Light source control means>

The light source control means 50 of the first embodiment shown in Figure 1 is composed of a light source driver circuit, and the like, and modulates and lights the array light source 10 by flashing light intensity of multiple light-emitting elements 12 in mutually different frequencies (f1, f2, f3, ...). Here, the light source control means 50 emits synchronization signals (Sync1, Sync2, Sync3, ...) for lock-in detection regarding respective frequencies (f1, f2, f3, ...).

### <Signal separation means>

The signal separation means 60 includes analogue-type lock-in amplifiers (61, 62, 63, ... ) for each lighting frequency (f1, f2, f3, ...). The same number of lock-in amplifiers as the light-emitting elements 12 use the synchronization signals (Sync1, Sync2, Sync3, ...) to synchronously detect detection signals from the single-element detector 40 at frequencies that are assigned respectively, sample the synchronized detected signals with A/D convertors that are provided respectively to output the same as amplitude data (D1, D2, D3, ...) of digital signals for each frequency. An analogue-type lock-in amplifier capable of detecting signal components of multiple frequencies (f1, f2, f3, ...) simultaneously may be used, so that the number of lock-in amplifiers to be used may be decreased. Accordingly, the detection signals can be separated into signal components of each frequency, and the amplitude data (D1, D2, D3, ...) regarding transmitted light from respective spot positions on the sample can be acquired simultaneously. In the case of an inverted-detection-type lock-in amplifier, a light emission waveform of each light-emitting element 12 is preferably a square wave.

When the spectroscopic means 30 of Figure 1 is a dispersive spectrometer, light intensity signal of spectroscopic wavelength region (λ) depending on the rotation angle of the diffraction grating is included in the detection signal. Therefore, the signal separation means 60 performs lock-in detection to the detection signal, so that the amplitude data (D1, D2, D3, ...) of all spots on the sample can be acquired for each spectroscopic wavelength region (λ). By repeating lock-in detection for all spectroscopic wavelength regions, spectral data for all spots on the sample can be acquired eventually.

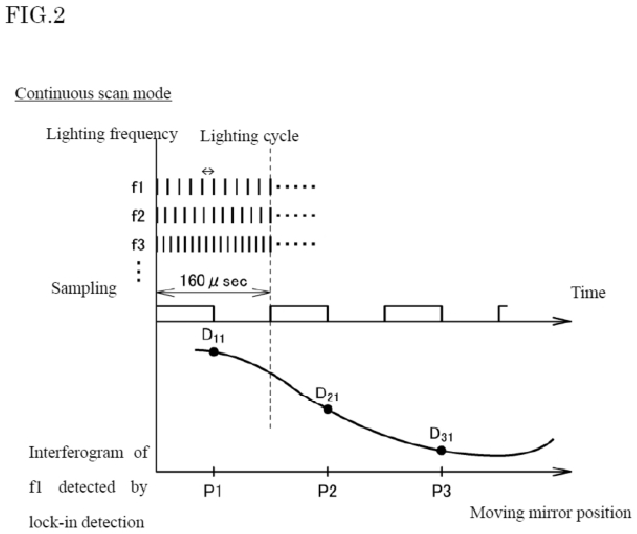

When the spectroscopic means 30 of Figure 1 is a Michelson interferometer, an interference wave generated depending on the optical path difference of the interferometer is included in the detection signal (also referred to as an interferogram signal). In the present embodiment, a method of sequentially positioning the moving mirror of the interferometer to each position (P1, P2, P3, ...) to measure the amplitude data (D1, D2, D3, ...) of the interferogram signals at each position (step scan measurement) may be used, or a method of continuously moving the moving mirror to positions (P1, P2, P3, ...) to measure the amplitude data (D1, D2, D3, ...) of the interferogram signals at each position (continuous scan measurement), as shown in the conceptual diagram of the continuous scan mode of Figure 2, may be used.

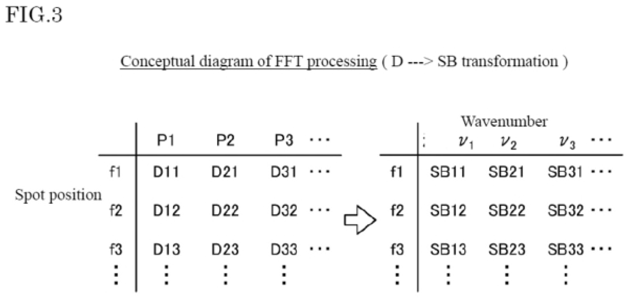

Specifically, the signal separation means 60 detects the detection signal by lock-in detection at the position P1 of the moving mirror to acquire the amplitude data (D11, D12, D13, ...) of multiple spot positions on the sample at the position P1. By executing detection and signal processing for each position (P1, P2, P3, ...) of the moving mirror, interferogram signals of all spots on the sample can be acquired. As shown in the conceptual diagram of FFT processing in Figure 3, by executing FFT processing for the position of the moving mirror to the interferogram signals corresponding to each spot (e.g., interferogram signals "D11, D21, D31, ..." of frequency f1), spectral data in the spot of the frequency (e.g., spectral data "SB11, SB21, SB31, ..." of each wavenumber ν in frequency f1) can be acquired.

When the size of time constant of lock-in detection (time constant of a low pass filter) with respect to the scan rate of the moving mirror of the Michelson interferometer can be secured sufficiently, the continuous scan measurement can be selected; however, when it cannot be secured, the step scan measurement needs to be selected.

For example, when the continuous scan rate of the moving mirror is 1 mm/sec, and if sampling interval at the A/D convertor after the lock-in amplifier is each half-wavelength of the detection waveform (MONO signal) of the amount of movement of the moving mirror, it can be shortened to approximately 160 µsec. On the other hand, it is preferred that time constant of the lock-in amplifier is as large as possible (cut-off frequency is smaller), in the point that unnecessary frequency signal (noise) can be eliminated; however, considering phase deviation of each wavenumber of the interferogram signal or deviation of center burst, time constant of the lock-in amplifier is preferably set as the sampling interval or lower (e.g., 160 µsec or lower) of the A/D convertor.

Moreover, at lock-in detection, in order to reduce unintended influence of light caused by light-emitting elements to 10% or lower, lighting cycle of the light-emitting element 12 needs to be 1/10 or lower of time constant of lock-in detection, and in order to reduce influence to 1% or lower, lighting cycle of the light-emitting element 12 needs to be 1/100 or lower of time constant of lock-in detection.

According to analogue lock-in detection of the present embodiment, achievable S/N (Signal-to-Noise Ratio) is higher than that in FFT processing manner, to be described later. Moreover, an A/D convertor capable of high-speed sampling such as in FFT processing manner becomes unnecessary.

A digital lock-in amplifier and one A/D convertor capable of high-speed sampling can be used to execute lock-in detection by digital processing.

### <Second embodiment>

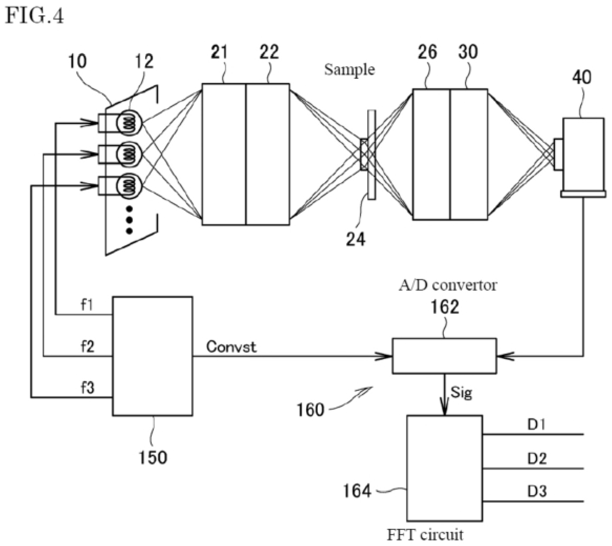

Figure 4 is a diagram of an entire configuration of the spectroscopic imaging apparatus according to the second embodiment of the present invention. The method for controlling light emission of the array light source 10 at a light source control means 150, and the method for separating signals at a signal separation means 160 are different, but other configurations are the same as the spectroscopic imaging apparatus of the first embodiment.

The light source control means 150 modulates and lights the array light source 10 by flashing light intensity of multiple light-emitting elements 12 at mutually different frequencies (f1, f2, f3, ...). Moreover, the light source control means 150 defines a period corresponding to the least common multiple (Tcyc) of each cycle (1/f1, 1/f2, 1/f3, ...) of multiple light-emitting elements 12 as a one cycle of a lighting period, and emits a sampling starting signal (Convst signal) at a timing when lighting starts in each cycle.

The signal separation means 160 includes an A/D convertor 162 that samples an analogue detection signal at high speed, and an FFT circuit 164 that performs fast Fourier transform (FFT) processing to the sampled digital signal. The A/D convertor 162 detects the sampling starting signal (Convst signal) from the light source control means 150 to start sampling of the analogue detection signal from the single-element detector 40. Moreover, the A/D convertor 162 executes A/D sampling, having a period (Tcyc x n) that is n times of one cycle of the lighting period (Tcyc period) as a sampling period. The sampling rate of the A/D convertor 162 is approximately 10 times faster than the lighting frequency. Accordingly, a Sigt signal at a timing Tt of sampling is acquired. n may be set freely, and the larger it is, the measurement time increases, but S/N and frequency resolution after FFT improve.

The FFT circuit 164 performs FFT processing to the acquired digital signal to acquire the amplitude data (D1, D2, D3, ...) depending on the signal components of the frequencies (f1, f2, f3, ...). That is, amplitude data of light intensity corresponding to each spot position on the sample is acquired. In signal separation at FFT processing, a light-emission waveform of each light-emitting element 12 is preferably a sine wave.

When the spectroscopic means 30 of Figure 4 is a dispersive spectrometer, light intensity signal of spectroscopic wavelength region (λ) depending on the rotation angle of the diffraction grating is included in the detection signal. Accordingly, the signal separation means 160 can acquire amplitude data (D1, D2, D3, ...) of all spots on the sample for each spectroscopic wavelength region (λ) by executing FFT processing to the detection signal. By repeating this for all spectroscopic wavelength regions, the spectral data in all spots on the sample can be acquired eventually.

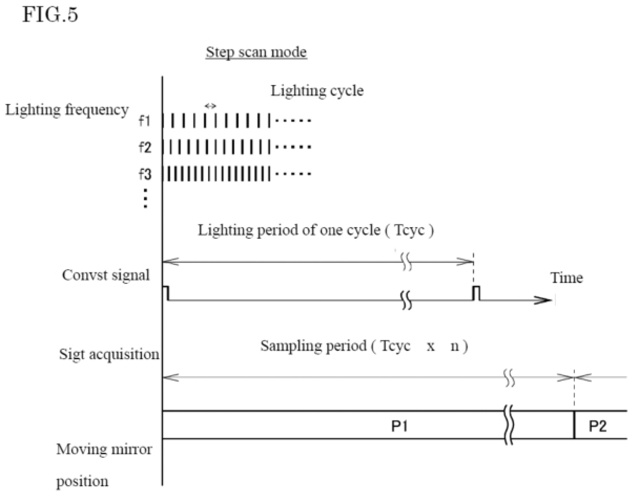

When the spectroscopic means 30 is a Michelson interferometer, an interference wave generated depending on the optical path difference of the interferometer is included in the detection signal (interferogram signal). In the present embodiment, the step scan measurement is executed by sequentially positioning the moving mirror of the interferometer to each position (P1, P2, P3, ...) to measure amplitude data (D1, D2, D3, ...) of the interferogram signals at each position, as shown in the conceptual diagram of the step scan mode of Figure 5.

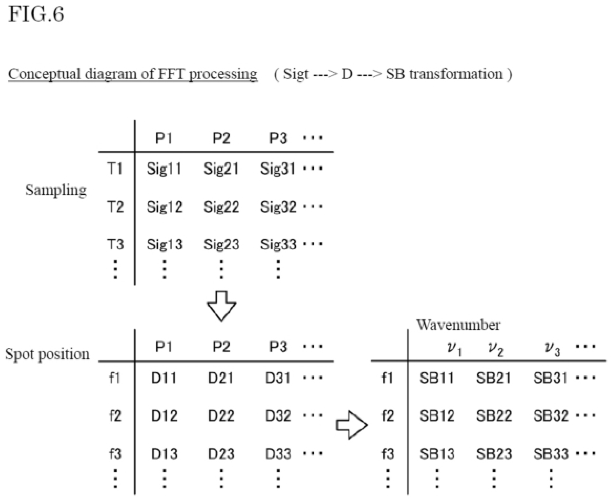

Specifically, the A/D convertor 162 samples the detection signal at the position P1 of the moving mirror at timings (T1, T2, T3, ...) to acquire Sigt signals (Sig11, Sig12, Sig13, ...). As shown in the conceptual diagram of FFT processing in Figure 6, the FFT circuit 164 executes FFT processing to these Sigt signals to acquire amplitude data (D11, D12, D13, ...) of multiple spot positions on the sample at the position P1. By executing these sampling and signal processing at each position (P1, P2, P3, ...) of the moving mirror, interferogram signals of all spots on the sample can be acquired. In addition, by executing FFT processing for the position of the moving mirror to the interferogram signals (e.g., interferogram signals "D11, D21, D31, ..." of frequency f1) corresponding to each spot, spectral data in the spot of the frequency (e.g., spectral data "SB11, SB21, SB31, ..." of frequency f1) can be acquired.

In the second embodiment, if the A/D convertor 162 is a general A/D convertor, the detection signal can be sampled for the lighting frequency up to approximately 50 kHz. And if the A/D convertor 162 is further capable of high-speed sampling, the detection signal can be sampled for the lighting frequency up to approximately 10 MHz. In the present embodiment, since the A/D convertor 162 is designed for high lighting frequency and signal separation is performed by digital FFT processing, hardware devices of the A/D convertor 162 do not need to be changed when the total number of the light-emitting elements 12 of the array light source 10 is to be increased, for example. Therefore, only by increasing the setting number of light-emission frequencies of each light-emitting element 12, it can deal with the increase in the total number of the light-emitting elements 12, so that implementation cost can be reduced.

In the second embodiment, contamination of signals between the light-emitting elements 12 may occur due to distortion of the light-emission waveform appearing to unintended frequency as noise; however, contamination can be avoided to a certain level by shifting the setting value of the light-emission frequencies of each light-emitting element 12.

Moreover, even when the light-mission frequencies f of the two light-emitting elements 12 are the same, signal components of the two light-emitting elements 12 can be separated by FFT processing of the present embodiment if the phase θ is shifted for 90 degrees. In this case, FFT processing is preferably executed by taking phase deviation that occurs in the circuit into consideration, such that output after FFT processing is divided into a real-axis component and an imaginary-axis component.

### <Third embodiment>

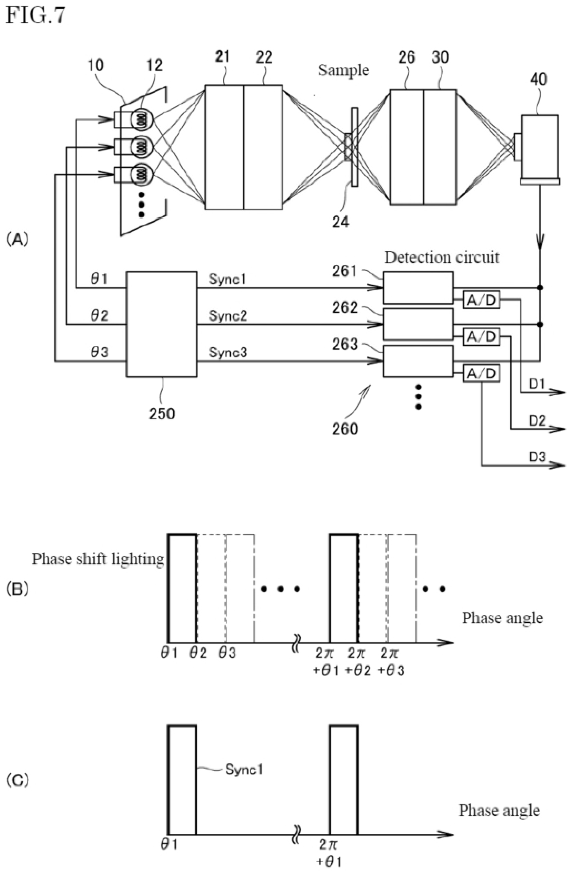

Figure 7 is a diagram showing an entire configuration of the spectroscopic imaging apparatus according to the third embodiment of the present invention. The method for controlling light emission of the array light source 10 at a light source control means 250, and the method for separating signals at a signal separation means 260 are different, but other configurations are the same as the spectroscopic imaging apparatus of the first embodiment.

The light source control means 250 modulates and lights the array light source 10 by flashing light intensity of multiple light-emitting elements 12 with the same frequency but mutually different phases (θ1, θ2, θ3, ...). Moreover, the light source control means 250 outputs synchronization signals (Sync1, Sync2, Sync3, ...) that oscillate at the same timing as the flashing timing of each light-emitting element 12.

Figure 7 shows a control waveform of phase shift with respect to the array light source 10. A nanocarbon light source is used, so that the duty ratio of pulsed lighting of each light-emitting element 12 is not limited to 50:50, and pulsed lighting in which ratio of lighting period is small, such as 5:95 or 10:90, for example, can be performed. By shifting the phases θ of the light-emitting elements 12 for 5 (e.g., corresponds to 5% of one cycle), 10 light-emitting elements 12 having phases θ different to each other can be lighted in pulses simultaneously.

The signal separation means 260 includes analogue detection circuits (261, 262, 263, ...) for each phase (θ1, θ2, θ3, ...). The same number of detection circuits as the light-emitting elements 12 use the synchronization signal (Sync) to synchronously detect the detection signal from the single-element detector 40 with the phases θ that are assigned respectively, and sample the synchronized detected signal with the A/D convertor that are provided respectively to output the same as amplitude data (D1, D2, D3, ...) of digital signals for each phase θ.

The difference between the lock-in amplifier 61 of the first embodiment and the detection circuit 261 of the present embodiment is that in the lock-in amplifier 61, "+1" is multiplied to the detection signal at assertion of the synchronization signal (Sync), and "-1'" is multiplied to the detection signal at negation of the synchronization signal (Sync), and in the detection circuit 261, "+1" is multiplied to the detection signal at assertion of the synchronization signal (Sync), and "0" is multiplied to the detection signal at negation of the synchronization signal (Sync). By this difference, the detection circuit 261 can execute signal separation by phase shift. Moreover, unlike signal separation with frequency, conditions of light emission of each light-emitting element can be equalized. A light-emission waveform of each light-emitting element 12 is preferably a square wave.

As described above, in analogue detection, the detection circuits (261, 262, 263, ...) and the following A/D convertors need to be prepared for the number of the light-emitting elements 12, respectively. In digital detection, one A/D convertor capable of high-speed sampling is used before detection, and detection by digital processing with a computer is executed, so that the detection circuits (261, 262, 263, ...) become unnecessary.

Similar to the first embodiment, the spectroscopic imaging apparatus of Figure 7 can be applied when the spectroscopic means 30 is a dispersive spectrometer, and also when it is a Michelson interferometer.

### <Fourth embodiment>

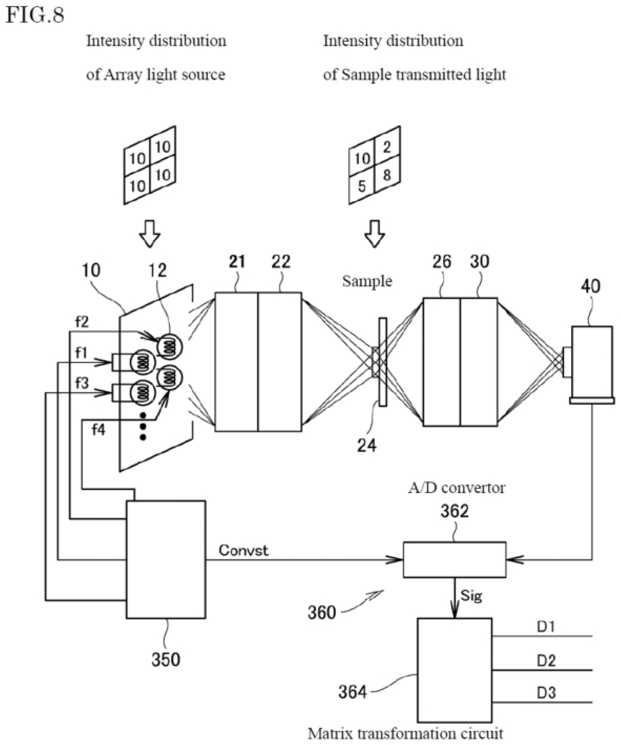

Figure 8 is a diagram of an entire configuration of the spectroscopic imaging apparatus according to the fourth embodiment of the present invention. The method for controlling light emission of the array light source 10 at a light source control means 350, and the method for separating signals at a signal separation means 360 are different, but other configurations are the same as the spectroscopic imaging apparatus of the first embodiment.

The light source control means 350 modulates and lights the array light source 10 by flashing light intensity of multiple light-emitting elements 12 in a light-emission pattern based on a Hadamard matrix. Moreover, the light source control means 350 defines a lighting period of one cycle of the light-emission pattern based on the Hadamard matrix, and emits the sampling starting signal (Convst signal) at a timing when lighting starts in each cycle.

The signal separation means 360 includes an A/D convertor 362 that samples an analogue detection signal, and a matrix transformation circuit 364 that converts the sampled digital signal with the Hadamard matrix. The A/D convertor 362 detects the sampling starting signal (Convst signal) from the light source control means 350 to start sampling of the analogue detection signal from the single-element detector 40. Moreover, the A/D convertor 362 executes A/D sampling, having a period (Tcyc x n) that is n times of one cycle of the lighting period (Tcyc period) as a sampling period. The sampling rate of the A/D convertor 362 is set to be approximately 10 times faster than the lighting frequency. Accordingly, the Sigt signal at the timing Tt of sampling is acquired. n may be set freely, and the larger it is, the measurement time increases, but S/N and accuracy of transformation with the Hadamard matrix improve.

The matrix transformation circuit 364 performs matrix transformation by the Hadamard matrix, which is the same as the one used to the acquired digital signal at the light source control means 350, to acquire amplitude data (D1, D2, D3, ...) depending on the signal component resulting from the light-emitting element 12. That is, the amplitude data (D1, D2, D3, ...) of light intensity corresponding to each spot position on the sample is acquired.

Similar to the first embodiment, the spectroscopic imaging apparatus of Figure 8 can be applied when the spectroscopic means 30 is a dispersive spectrometer, and also when it is a Michelson interferometer.

To make the explanation easier, lighting control and a method for separating the detection signal using the Hadamard matrix are described regarding a case in which 4 light-emitting elements 12 are two-dimensionally disposed in 2 rows x 2 columns. Distribution of light intensity when 4 light-emitting elements 12 are lighted is shown as "10, 10, 10, 10". Moreover, intensity of light that transmitted 4 spot positions projected on the sample is shown as "10, 2, 5, 8".

The light source control means 350 uses the Hadamard matrix of order N, which is the same as the total number N (N is an integer of 2 or greater) of the light-emitting elements 12. Here, the following Hadamard matrix of order 4 is used.
[Math. 1] $\left(\begin{matrix}1 & 1 & 1 & 1 \\ 1 & - 1 & 1 & - 1 \\ 1 & 1 & - 1 & - 1 \\ 1 & - 1 & - 1 & 1\end{matrix}\right)$ (1)

Lighting control of the array light source 10 is executed as follows. The light source control means 350 uses the value in the first row of the Hadamard matrix to execute two light-emission patterns of: a pattern of lighting the light-emitting element corresponding to "1" and turning off the light-emitting element corresponding to "-1"; and a pattern of turning off the light-emitting element corresponding to "1" and lighting the light-emitting element corresponding to "-1". The light source control means 350 sequentially executes the two light-emission patterns of each row of the Hadamard matrix to the final row (Nth row), and this is regarded as one cycle of the light-emission pattern by the Hadamard matrix. The light source control means 350 repeats actions of one cycle of the light-emission pattern for a required number of times.

4 light-emitting elements 12 having intensity distribution of "10, 10, 10, 10" flash in the light-emission pattern by the Hadamard matrix, and light from the light-emitting elements 12 is absorbed when it is transmitted through the sample at respective spot positions, so that light having intensity distribution of "10, 2, 5, 8" from 4 spot positions is modulated in the light-emission pattern by the Hadamard matrix to be detected as one Sigt signal.

From the light-emission pattern by the first row of the Hadamard matrix, change in the light intensity distribution from 4 spot positions is shown sequentially in the following.

| | | | |
|---|---|---|---|
| 10 | 2 | 5 | 8 |
| 0 | 0 | 0 | 0 |
| 10 | 0 | 5 | 0 |
| 0 | 2 | 0 | 8 |
| 10 | 2 | 0 | 0 |
| 0 | 0 | 5 | 8 |
| 10 | 0 | 0 | 8 |
| 0 | 2 | 5 | 0 |

The signal separation means 360 acquires the difference between the detection signals (Sigt signal) of two light-emission patterns of each row of the Hadamard matrix. By executing transformation based on the Hadamard matrix on one cycle of detection signals, signal components of each light-emitting element 12 can be acquired.

In the example of the above-described the Hadamard matrix of order 4, one cycle of the detection signals is calculated as follows. For example, intensity distribution is "10, 0, 5, 0" in the first light-emission pattern by the second row of the Hadamard matrix, and intensity of "15", which is the sum thereof, is detected as the detection signal. Moreover, intensity distribution is "0, 2, 0, 8" in the second light-emission pattern by the second row of the Hadamard matrix, and intensity of "10", which is the sum thereof, is detected as the detection signal. The difference thereof is "5".

| | | | | |
|---|---|---|---|---|
| 10 | 2 | 5 | 8 | : Detection value 25 |
| 0 | 0 | 0 | 0 | : Detection value 0; Difference 25 |
| 10 | 0 | 5 | 0 | : Detection value 15 |
| 0 | 2 | 0 | 8 | : Detection value 10; Difference 5 |
| 10 | 2 | 0 | 0 | : Detection value 12 |
| 0 | 0 | 5 | 8 | : Detection value 13; Difference -1 |
| 10 | 0 | 0 | 8 | : Detection value 18 |
| 0 | 2 | 5 | 0 | : Detection value 7; Difference 11 |

Therefore, a numerical sequence of "25, 5, -1, 11" is acquired. When it is converted into one element, it becomes a numerical sequence of "25/4, 5/4, -1/4, 11/4". Supposing that the numerical sequence of "25, 5, -1, 11" is acquired when the A/D convertor 362 of the present embodiment calculates the difference between the detection signals to be sampled, the matrix transformation means 364 executes matrix transformation processing by the Hadamard matrix of Equation 1 on the numerical sequence of "25/4, 5/4, -1/4, 11/4", which is converted into one element. Accordingly, a numerical sequence of "10, 2, 5, 8", which are values of light intensity of each light-emitting element 12, can be acquired. That is, it is as in the following equation.
[Math. 2] $\begin{matrix}\left(25/4 5/4 -1/4 11/4\right) \left(\begin{matrix}1 & 1 & 1 & 1 \\ 1 & - 1 & 1 & - 1 \\ 1 & 1 & - 1 & - 1 \\ 1 & - 1 & - 1 & 1\end{matrix}\right) \\ = \left(10 2 5 8\right)\end{matrix}$ (2)

### <Fifth embodiment>

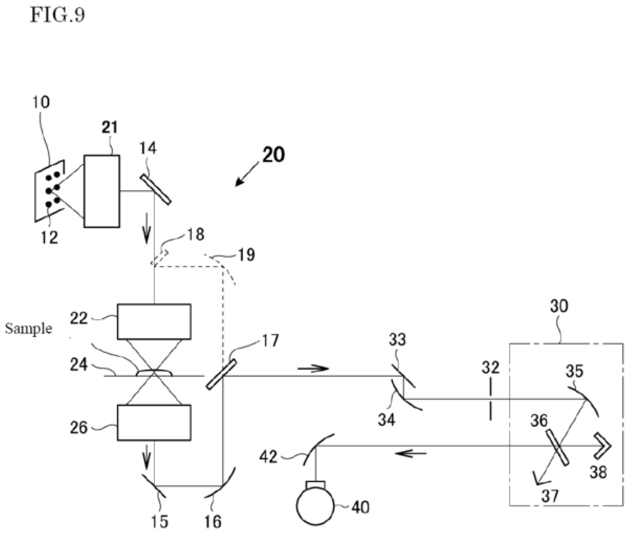

Figure 9 is a diagram of an entire configuration of the spectroscopic imaging apparatus according to the fifth embodiment of the present invention. In the spectroscopic imaging apparatus of the present embodiment, an irradiating side scan mirror 14 as a moving apparatus is provided on the optical path between the light source side Cassegrain mirror 21 at an exit of the array light source 10 and the irradiating side Cassegrain mirror 22 that forms a spot of infrared light on the sample. In the irradiating side scan mirror 14, a mirror surface is configured to be rotatable for changing an angle of incidence of the infrared light from the light source side Cassegrain mirror 21. By this scan mirror 14, multiple spot positions on the sample of the infrared light can be moved variously without changing the positional relationship between the sample and the irradiating side Cassegrain mirror 22.

Similarly, a scan mirror for transmitted light 15 as a moving apparatus is provided on the lower optical path of the collecting side Cassegrain mirror 26. In this scan mirror for transmitted light 15, its mirror surface is configured to be rotatable, so that an angle of incidence of transmitted light can be changed. By this scan mirror 15, the detection region on the sample can be moved variously in accordance with the movement of multiple spot positions without changing the positional relationship between the sample and the collecting side Cassegrain mirror 26. These scan mirrors 14, 15 are configured such that the mirror surfaces can be rotated with respect to two axes that are independent of each other.

In the spectroscopic imaging apparatus of Figure 9, transmitted light that reflected the scan mirror for transmitted light 15 passes through an entrance aperture 32 via several reflection mirrors 16, 17, 33, 34 to enter the Michelson interferometer (spectroscopic means 30).

Moreover, in the reflection mirror 17 of Figure 9, its mirror surface is configured to be rotatable as a mechanism for switching from measurement of transmitted light to measurement of reflected light. In addition, a scan mirror for reflected light 18 is provided, as a measurement optical system of reflected light, between the irradiating side scan mirror 14 and the irradiating side Cassegrain mirror 22. This scan mirror for reflected light 18 is disposed in a half of the region divided by a boundary line passing through the optical axis in a cross-section perpendicular to the optical axis connecting the irradiating side scan mirror 14 and the irradiating side Cassegrain mirror 22, and is not disposed in the other half of the region; therefore, it is also referred to as a half-mirror. That is, the infrared light that travels from the irradiating side scan mirror 14 to the irradiating side Cassegrain mirror 22 passes through a space where the scan mirror for reflected light 18 is not disposed, and enters the irradiating side Cassegrain mirror 22. On the other hand, the infrared light that is reflected by the sample and collected by the irradiating side Cassegrain mirror 22 travels to the region where the scan mirror for reflected light 18 is disposed, so that it is reflected by the scan mirror for reflected light 18 to travel in a direction to a parabolic mirror 19. In addition, as similar to the above-described scan mirrors 14, 15, the scan mirror for reflected light 18 is also configured such that the mirror surface can be rotated with respect to two axes that are independent of each other, so that it can change the angle of incidence of the reflected light from the sample. By this scan mirror 18, the detection region on the sample can be variously moved in accordance with the movement of multiple spot positions without changing the positional relationship between the sample and the irradiating side Cassegrain mirror 22. Instead of the scan mirror for reflected light 18 that spatially divides light, a half-mirror that divides light in terms of intensity (e.g., a mirror that transmits through half of the intensity of incident light, and reflects off the remaining half) may be used.

In measurement mode of reflected light, the mirror surface of the reflection mirror 17 rotates 90 degrees, so that the reflected light from the sample that is reflected by the scan mirror for reflected light 18 is reflected by the parabolic mirror 19 and the reflection mirror 17 sequentially, passes through the entrance aperture 32 via the reflection mirrors 33, 34 to enter the Michelson interferometer.

The above-described scan mirrors 14, 15, 18 are an example of a moving means for changing the relative positional relationship between the sample and multiple spots projected on the sample. By such moving means, an irradiation portion (multiple spot positions) on the sample can be sequentially moved within the desired measurement range. Accordingly, the spectroscopic image acquired in partial imaging can be synthesized to acquire a spectroscopic image of a wide area for the entire measurement range. The moving stage 24 of the sample in Figure 9 is also an example of the moving means of the present embodiment, and it can change the relative positional relationship between the sample and the multiple spot positions projected on the sample by moving the moving stage 24 in a direction perpendicular to the optical axis.

Here, the configuration of the Michelson interferometer as the spectroscopic means 30 in Figure 9 is described briefly. The Michelson interferometer comprises an entrance aperture 32 that limits the angle of incidence of incident light, a collimator mirror 35 that collects and collimates the infrared light from the entrance aperture 32, a beam splitter 36 that divides parallel light into two light beams, a fixed mirror 37 that reflects off one of the divided light beam at a fixed position, and a moving mirror 38 that reflects off the other divided light beam while changing the distance from the beam splitter 36. The reflected light beams from the fixed mirror 37 and the moving mirror 38 are synthesized again at the beam splitter 36 to be output as an interference wave of the infrared light depending on the optical path difference of the two divided light beams. The interference wave from the Michelson interferometer is collected at a parabolic mirror 42, and detected at a light-receiving surface of the single-element detector 40.

Effects of the spectroscopic imaging apparatus of each embodiment described above are described.
(1) In each embodiment, the array light source 10 in which numerous light-emitting elements 12 of micrometer order or smaller are disposed on one chip is used, so that images of numerous minute light-emitting elements 12 (multiple spots) are projected on the sample, and the light-emitting element 12 and the spot can be associated in the one-to-one relationship.

Moreover, by lighting each light-emitting element 12 in cyclicities that are different from each other, the multiplex-modulated detection signal can be acquired from the single-element detector 40, and by executing processing of separating this into signals of each cyclicity of the light-emitting element, the signal component corresponding to each spot position on the sample can be acquired.

The spectroscopic imaging apparatus configured as above can detect transmitted light (or reflected light) from multiple spots with the single-element detector 40 collectively, so that measurement can be performed with high spatial resolution, and signal components of multiple measurement portions on the sample can be acquired collectively without using a conventional linear array detector.

For example, spectroscopic imaging of the same level as spatial resolution of a visible-light microscopic image can be performed, so that the visible-light microscopic image and the spectroscopic image can be compared easily.

(2) Moreover, in each embodiment, a pair of Cassegrain mirrors 21, 22 is disposed between the array light source 10 and the sample, so that extremely weak infrared light from the minute light-emitting element 12 is effectively collected at high NA (numerical aperture), and irradiates respective measurement portions on the sample. Moreover, by the coaxial optical system of the Cassegrain mirrors 21, 22, images of multiple minute light-emitting elements 12 are formed on the sample one-to-one. In coaxial optical system irradiation, a light source image is formed on the sample without going through an off-axis aspherical (parabolic, ellipsoidal) mirror, so that distortion of the light source image becomes extremely small, and measurement with low stray light can be achieved. In addition, when the Michelson interferometer is comprised as the spectroscopic means 30, it is disposed behind the sample, and performs post-spectroscopic processing to the transmitted light through the sample or the reflected light from the sample. Accordingly, the image of the array light source 10 is directly formed on the sample without going through the Michelson interferometer, so that it is not affected by aberration of the aspheric mirror of the Michelson interferometer, and entry of stray light to the spot region of the sample is suppressed, thus enabling low stray light measurement. Accordingly, by using the light-emitting element of sufficient small size, such as 1/3 to 1/10 of the measurement wavelength, images of the multiple minute light-emitting surfaces formed on the sample can be made closer to the size of diffraction limit of each light.

(3) In general, the spectroscopic imaging apparatus requires high sensitivity measurement since it handles weak infrared light, so that the sample needs to be irradiated with infrared light in which its intensity changes cyclically. Since an infrared light source of a conventional spectroscopic imaging apparatus has a large heat capacity due to its large size, it is not suitable for high-speed flashing. Therefore, the interference wave of the infrared light formed by the Michelson interferometer was irradiated to the sample (pre-spectroscopic processing).

On the other hand, in the array light source 10, the volume of each light-emitting element is small. Moreover, it exhibits high followability to operations of lighting/turning off, and pulsed lighting with high frequency can be performed. Therefore, in the spectroscopic imaging apparatus of the first embodiment, for example, the detection signal of extremely weak infrared light from the single-element detector 40 can be detected by lock-in detection by using a synchronization signal that synchronizes with a frequency signal of the light source 10, even in post-spectroscopic processing, and imaging measurement (e.g., separation from background radiation at room temperature) with high sensitivity can be executed.

Moreover, not limited to lock-in detection, imaging measurement with high sensitivity can be executed by sampling the detection signal with the A/D convertor 162 at high speed, and then separating the detection signal into signal components of each frequency by the FFT circuit 164, as in the spectroscopic imaging apparatus of the second embodiment, for example.

Moreover, not limited to modulation of the frequency f, imaging measurement with high sensitivity can be executed by a method of modulating and lighting the array light source 10 with mutually different phases, and acquiring signal components of each phase θ by the detection circuits 261, 262, 263, ..., as in the spectroscopic imaging apparatus of the third embodiment, for example.

In addition, imaging measurement with high sensitivity can also be executed by a method of modulating and lighting the array light source 10 in a cyclical light-emission pattern by using the Hadamard matrix, executing transformation processing by the Hadamard matrix with the signal separation means 360, and acquiring signal components resulting from each light-emitting element 12, as in the spectroscopic imaging apparatus of the fourth embodiment, for example.

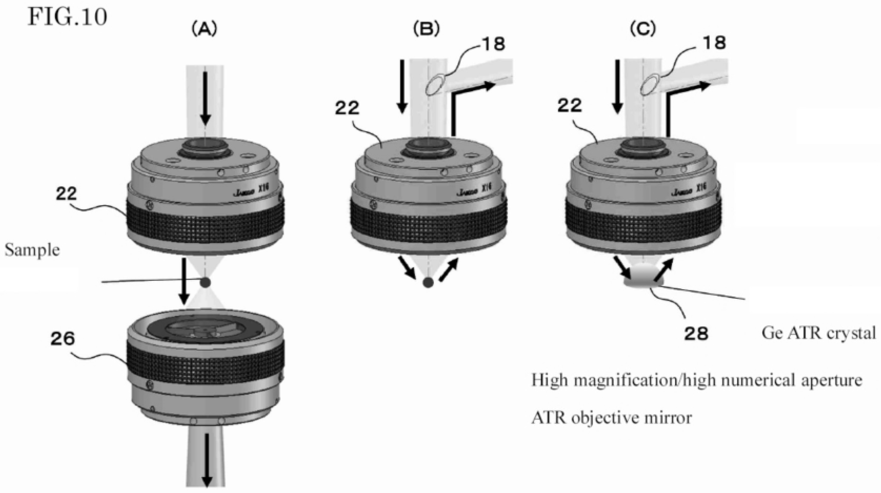

(4) Moreover, high-spatial-resolution imaging measurement can be executed with the microscopic measurement portion 20 in which measurement mode is suitably selected from three measurement modes (transmission, reflection, total-reflection), as shown in Figure 10. In the transmission measurement mode of Figure 10 (A), the Cassegrain mirrors 22, 26 disposed symmetrically above and below the sample are used. In the reflection measurement mode of Figure 10 (B), the Cassegrain mirror 22 at the upper side of the sample is used. In the total-reflection measurement mode of Figure 10 (C), a high-magnification/high numerical aperture Cassegrain mirror 22 having an ATR crystal 28 for total reflection measurement is used.

In the above-described embodiments, Cassegrain mirrors 21, 22, 26 are used in the microscopic measurement portion 20; however, an objective lens can be used instead of the Cassegrain mirror. In general, however, visible light for observation of the sample is often introduced in infrared microscopes, since there is hardly any lens of good quality and low cost that transmits both visible light for observation and infrared light for measurement, and problems of chromatic aberration tend to occur easily when a broad infrared wavelength band is used in lenses, Cassegrain mirrors of reflective-type collection system are preferred in infrared microscopes.

### Reference Signs List

- 10: Array light source
- 12: Light-emitting element (nanocarbon light-emitting element)
- 14, 15, 18: Scan mirror (moving means)
- 20: Microscopic measurement portion
- 21: Light source side Cassegrain mirror (irradiating optical system)
- 22: Irradiating side Cassegrain mirror (irradiating optical system)
- 24: Moving stage (moving means)
- 26: Collecting side Cassegrain mirror (collecting optical system)
- 28: ATR crystal
- 30: Spectroscopic means
- 32: Entrance aperture
- 40: Single-element detector (MCT detector)
- 50: Light source control means
- 60: Signal separation means

## Claims

1. A spectroscopic imaging apparatus comprising: an array light source composed of multiple light-emitting elements; a microscopic measurement portion that projects multiple spots, which are images of the light-emitting elements, on a sample; a spectroscopic means that spectroscopically processes light from positions of the multiple spots collectively; and a single-element detector that detects light from the spectroscopic means, the spectroscopic imaging apparatus configured to acquire a spectroscopic image of the sample based on a detection signal of the single-element detector, wherein
the light-emitting element has a light-emitting surface having a size of 0.1 µm or greater and 30 µm or less, wherein the size of the light-emitting surface is expressed as a diameter in the case of a circular shape, a length of one side in the case of a square, or a length of the longitudinal side in the case of a rectangle, and a light source control means that modulates light intensity of the multiple light-emitting elements in cyclicities different from each other is comprised, and
a signal separation means that separates the detection signal into signal components of each cyclicity of the light-emitting elements is comprised to acquire the spectroscopic image based on the separated signal component.

2. The spectroscopic imaging apparatus according to claim 1, wherein the light source control means modulates light intensity of the multiple light-emitting elements with different frequencies (f1, f2, f3, ...).

3. The spectroscopic imaging apparatus according to claim 1, wherein the light source control means modulates light intensity of the multiple light-emitting elements with the same frequency but different phases (θ1, θ2, θ3, ...).

4. The spectroscopic imaging apparatus according to claim 1, wherein the signal separation means uses a signal that synchronizes with the cyclicity of each light-emitting element to synchronously detect signal components of the cyclicities of respective light-emitting elements from the detection signal.

5. The spectroscopic imaging apparatus according to claim 2, wherein the signal separation means samples the detection signal at a timing depending on the frequencies (f1, f2, f3, ...) of the light-emitting elements, transforms the sampled signal into a digital signal, performs fast Fourier transform (FFT) processing, and acquires signal components of the frequencies (f1, f2, f3, ...) of each light-emitting element.

6. The spectroscopic imaging apparatus according to claim 1, wherein the light source control means
executes two light-emission patterns of: a pattern of lighting the light-emitting element corresponding to "1" and turning off the light-emitting element corresponding to "-1"; and a pattern of turning off the light-emitting element corresponding to "1" and lighting the light-emitting element corresponding to "-1", for each row of a Hadamard matrix of order N, which is the same as the total number N of the multiple light-emitting elements, and
modulates light intensity of the multiple light-emitting elements by using the first row to the Nth row of the Hadamard matrix as one cycle, and
the signal separation means acquires the difference between the detection signals of the two light-emission patterns for each row of the Hadamard matrix, executes transformation based on the Hadamard matrix, and acquires signal components of each light-emitting element.

7. The spectroscopic imaging apparatus according to any of claims 1 to 6, further comprising a moving means that changes a relative positional relationship between the sample and the multiple spots projected on the sample.

8. The spectroscopic imaging apparatus according to claim 7, wherein the microscopic measurement portion comprises at least one measurement optical system selected from transmission measurement, reflection measurement, and total-reflection measurement.
